# EUROPEAN PATENT APPLICATION

(11) **EP 3 112 733 A1**
(43) Date of publication of application: **04.01.2017**
(21) Application number: 15174216.0
(22) Date of filing: 29.06.2015
(51) Int. Cl.: F16K 37/00, F16K 31/122

(54) **VALVE CONTROLLER AND METHOD OF CONTROLLING A VALVE**

(71) Applicant: Alfa Laval Corporate AB, 221 00 Lund (SE)
(72) Inventor: Lund Henriksen, Axel, 5000 Odense C (DK); Priisholm, Thomas, 6000 Kolding (DK)
(74) Representative: Alfa Laval Attorneys

(57) **Abstract**

A valve arrangement (100) comprises a valve (1) and a valve controller (2) configured to execute a configuration phase. In this phase, the valve controller (2) controls an actuator (11) to set a flow controlling element (7) of the valve (1) in predefined first and second states and acquires first and second nominal position values (P1, P2) for the first and second states from a position sensor (26) associated with the valve (1). Based on the first and second nominal position values (P1, P2), the valve controller (2) assigns the valve to a specific valve type and selects a validation criterion for the valve (1) based on valve type. During a subsequent flow control phase, the valve controller (2) may evaluate the validation criterion and generate a status signal to indicate an error status if the validation criterion is violated. The validation criterion may define an acceptable range of position values for the flow controlling element while the flow controlling element is in one of the first and second states.

## Description

### Technical Field

The present invention generally relates to fluid valves and their deployment in industrial environments, and in particular to techniques for facilitating configuration and installation of fluid valves.

### Background

There are many different types of fluid valves that are deployed in various industrial applications. Such fluid valves include seat valves of both single-seat type and double-seat type, as well as membrane valves, butterfly valves etc. The fluid valves may be designed as on-off valves, changeover valves, mixing valves, pressure regulating valves, control valves, sampling valves, etc.

In industrial applications, fluid valves are arranged to influence and control a process in a targeted manner, e.g. in a process plant. The process plant may thus involve a large number of fluid valves, and each fluid valve may need to be precisely controlled to perform a specific task at a specific time. It may also be vital to identify faulty fluid valves in a timely manner. These objectives require some form of process control.

For process control, it is common to electrically connect the fluid valves into a control network, in which a main controller operates to control the operation of the fluid valves, possibly based on data retrieved from the fluid valves as well as from other components such as sensors included in the control network. To reduce the demand on the main controller, it is known to provide each fluid valve with a valve controller which is connected to the fluid valve so as to control its operation based on commands or control signals from the main controller. Thus, the valve controller includes least some form of intelligence, by it being operable to recognize and act on the control signals.

For timely detection of faults, the valve controllers may be configured to run a self-diagnostic test during their regular operation and inform the main controller whenever an error condition is detected. During the self-diagnostic test, the valve controller may evaluate one or more validation criteria that are relevant for fault detection in the valve that are being operated by the valve controller. Certain of these validation criteria may be specific to a particular valve type. The use of type-specific validation criteria may make the configuration and installation of the valve controllers more cumbersome for the operator of the control network, so as to ensure that each valve controller operates with the proper validation criteria.

This problem may be seen in a valve controller disclosed in WO2014/168908. The valve controller operates a valve and is configured to obtain sensor data from a number of different sensors installed in an actuator of the valve. The sensors may include vibration sensors, temperature sensors, acoustic emission sensors, pressure sensors and strain gauges. The sensor data is, *inter alia,* compared to predetermined validation criteria, denoted "event parameters", for detection of an alarm condition. The event parameters are derived through laboratory testing or historical data analysis and are stored in a memory of the valve controller. Clearly, it is vital that each valve controller operates with proper event parameters.

The difficulty of ensuring that the valve controller operates with a proper validation criterion may be particularly pronounced if the valve controller is generic in the sense that one and the same valve controller may be used with different types of valves. Such a valve controller is e.g. marketed by Alfa Laval under the trademark ThinkTop®.

### Summary

It is an objective of the invention to at least partly overcome one or more limitations of the prior art.

Another objective is to facilitate the procedure of configuring a valve controller for controlling a valve.

Yet another objective is to reduce the risk that the valve controller operates with an incorrect validation criterion.

One or more of these objectives, as well as further objectives that may appear from the description below, are at least partly achieved by a valve controller, a method of controlling a valve, a computer-readable medium, and a valve arrangement according to the independent claims, embodiments thereof being defined by the dependent claims.

A first aspect is a valve controller for a valve that comprises an actuator mechanically coupled to a flow controlling element. The valve controller is configured to receive a position signal indicative of a position of the flow controlling element and to control the actuator to position the flow controlling element. The valve controller is further configured to execute a configuration phase comprising: controlling the actuator to set the flow controlling element in a predefined first state; acquiring, from the position signal, a first nominal position value for the predefined first state while the flow controlling element is in the predefined first state; controlling the actuator to set the flow controlling element in a predefined second state; acquiring, from the position signal, a second nominal position value for the predefined second state while the flow controlling element is in the predefined second state; and assigning, based on the first nominal position value and the second nominal position value, the valve to a valve type among a group of valve types and selecting a validation criterion for the valve based on said valve type.

The first aspect provides a valve controller that is able to perform a self-configuration in which it automatically selects a proper validation criterion for the valve that is controlled by valve controller. The self-configuration is based on the finding that it is possible to discriminate between different valve types based on the nominal position values of the flow controlling element of the valve when set in two (or more) different predefined states. By the self-configuration, the procedure of configuring the valve controller is facilitated. The self-configuration also reduces the risk that the valve controller operates with an incorrect validation criterion, by reducing the need for human intervention during the configuration of the valve controller.

In one embodiment, the valve controller is configured to receive a valve control signal for controlling a fluid flow through the valve and to generate a status signal, and the valve controller is further configured to, subsequent to the configuration phase, perform a flow control phase comprising: controlling the actuator based on the valve control signal; evaluating the validation criterion; and generating the status signal to indicate an error status if the validation criterion is violated.

In one embodiment, the validation criterion defines an acceptable range of position values for the flow controlling element, as given by the position signal, while the flow controlling element is in one of the predefined first and second states. In this context, the valve controller may be configured to, when evaluating the validation criterion and while the flow controlling element is set in said one of the predefined first and second states, compare a current position value acquired from the position signal with the acceptable range of position values, and generate the status signal to indicate the error status when the current position value is outside the acceptable range of position values. Furthermore, the valve controller may be configured to generate the status signal to confirm said one of the predefined first and second states when the current position value lies within the acceptable range of position values.

In one embodiment, the acceptable range of position values is predefined for each valve type and has a predefined relation to one of the first and second nominal position values, and the valve controller is configured to set the acceptable range of position values based on the valve type and in the predefined relation to said one of the first and second nominal position values. In an alternative embodiment, the acceptable range of position values is predefined for each valve type, and the valve controller is configured to set the acceptable range of position values based on the valve type and independent of the first and second nominal position values.

In one embodiment, at least two of the valve types in the group of valve types have different types of flow controlling elements.

In one embodiment, the group of valve types includes a butterfly-type valve and a seat-type valve.

In one embodiment, the valve controller is configured to assign the valve as a butterfly-type valve if the first or second nominal position value is less than a first limit value, and a difference between the first nominal position value and the second nominal position value exceeds a second limit value. Furthermore, the valve controller is configured to assign the valve as a seat-type valve if this validation criterion is not fulfilled.

In one embodiment, the predefined first and second states correspond to a respective end position along a movement trajectory for the flow controlling element.

In one embodiment, the valve is one of an on-off valve and a changeover valve.

In one embodiment, the valve controller further comprises a data processor configured to implement at least the configuration phase, and an electronic memory, said data processor being configured to, during the configuration phase, store the first nominal position value and the second nominal position value in the electronic memory for subsequent retrieval.

A second aspect is a method of controlling a valve. The method is performed by a data processor and comprises a sequence of configuration steps. The configuration steps comprises: generating an actuator control signal for controlling an actuator to set a flow controlling element of the valve in a predefined first state; acquiring, while the flow controlling element is in the predefined first state, a first nominal position value for the predefined first state from a position sensor associated with the valve; generating the actuator control signal for controlling the actuator to set the flow controlling element in a predefined second state; acquiring, while the flow controlling element is in the predefined second state, a second nominal position value for the predefined second state from the position sensor; and assigning, based on the first nominal position value and the second nominal position value, the valve to a valve type among a group of valve types and selecting a validation criterion for the valve based on said valve type.

In one embodiment, the method further comprises, during operation of the valve subsequent to the sequence of configuration steps, a step of evaluating the validation criterion and generating a status signal to indicate an error status if the validation criterion is violated.

In one embodiment, the validation criterion defines an acceptable range of position values for the flow controlling element, as given by the position sensor, while the flow controlling element is in one of the predefined first and second states. In this context, the above-mentioned step of evaluating may comprise: comparing, while the flow controlling element is set in said one of the predefined first and second states, a current position value acquired from the position sensor with the acceptable range of position values, and the status signal may be generated to indicate the error status when the current position value is outside the acceptable range of position values. The status signal may further be generated to confirm said one of the predefined first and second states when the current position value lies within the acceptable range of position values.

In one embodiment, the valve is assigned as a butterfly-type valve if the first nominal position value exceeds a first limit value, and a difference between the first nominal position value and the second nominal position value exceeds a second limit value. Furthermore, the valve may be assigned as a seat-type valve if this validation criterion is not fulfilled.

In one embodiment, the sequence of configuration steps further comprises: storing the first nominal position value and the second nominal position value in an electronic memory for subsequent retrieval by the data processor.

A third aspect is a computer-readable medium comprising instructions for causing a data processor to perform the method of the second aspect and its embodiments.

A fourth aspect is a valve arrangement comprising the valve controller of the first aspect and a valve. The valve further comprises: a valve housing; at least one inlet opening on the valve housing; at least one outlet opening on the valve housing; a fluid channel defined in the valve housing to extend between the at least one inlet opening and the at least one outlet opening; a flow controlling element arranged for movement in the fluid channel; and an actuator mechanically coupled to the flow controlling element and being directly or indirectly controlled by the valve controller to move the flow controlling element in the fluid channel so as to control a fluid flow through the valve housing between the at least one inlet opening and the at least one outlet opening.

Any one of the above-identified embodiments of the first aspect may be adapted and implemented as an embodiment of the second to fourth aspects to attain the corresponding advantages and effects.

Still other objectives, features, aspects and advantages of the invention will appear from the following detailed description, from the attached claims as well as from the drawings.

### Drawings

Embodiments of the invention will now be described in more detail, by way of example, with reference to the accompanying schematic drawings.
Fig. 1A is a side view of a valve arrangement that includes a valve controller and a valve and illustrates internal components of the valve arrangement, and Fig. 1B is a schematic plan view of a data processor in the valve controller in Fig. 1A and illustrates input and output signals of the data processor.
Fig. 2 is a plot of positions acquired for open and closed states in two different types of valves together with associated tolerance bands.
Fig. 3 is a flow chart of a configuration phase performed by the valve controller in Fig. 1A.
Fig. 4 is a plot of positions for open and closed states of valves of butterfly-type and seat-type.
Fig. 5 is a flow chart of a flow controlling phase performed by the valve controller in Fig. 1A subsequent to the configuration phase in Fig. 3.
Fig. 6 is a section view of a valve arrangement that includes a valve controller and a valve of seat-type.
Fig. 7A is a perspective view of a valve arrangement that includes a valve controller and a valve of butterfly-type, and Figs 7B-7C are exploded perspective views of an actuator and a valve housing included in the valve in Fig. 7A.

### Detailed Description

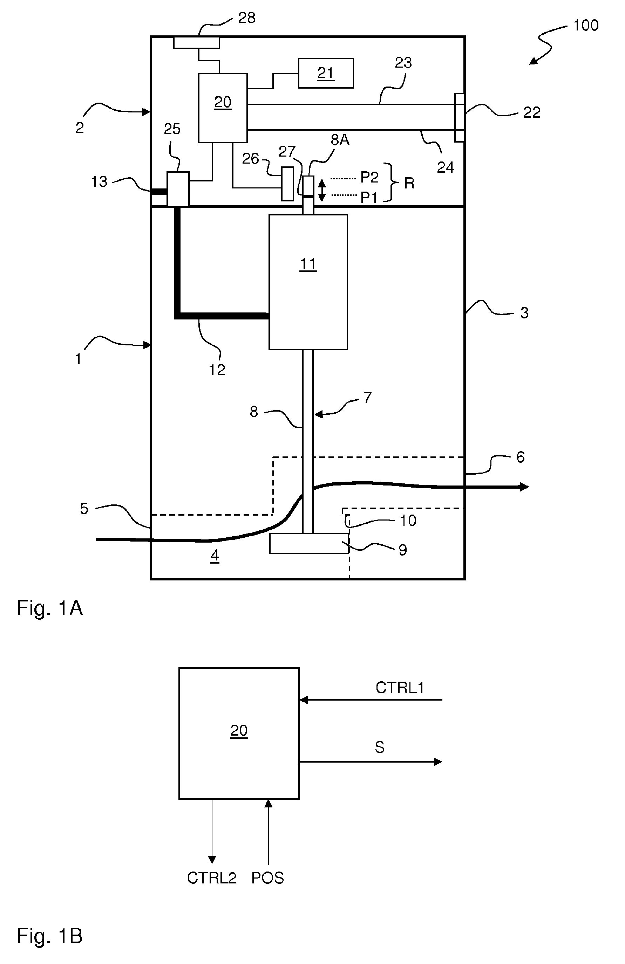

Fig. 1A schematically illustrates a valve arrangement 100. For brevity of presentation, all details of the valve arrangement 100 will not be described, but emphasis will be given to describing the overall structure and function of the valve arrangement 1. The valve arrangement 100 comprises a valve 1 and a control unit or valve controller 2 for controlling the operation of the valve 1. The valve controller 2 may be integrated with the valve 1 or, as shown, be implemented as a separate component for attachment onto an upper portion of the valve 1.

In the illustrated example, the valve 1 is a conventional seat valve and comprises a valve housing 3 that defines an internal fluid channel 4 which is indicated by dashed lines and extends between an inlet opening 5 and an outlet opening 6. The valve 1 comprises a flow controlling element 7, which is formed as an elongated valve steam 8 that extends into the fluid channel 4 and has a valve disc 9 at its lower portion. The valve stem 8 and the valve disc 9 are movable in unison on a linear path so as to move the valve disc 9 in relation to a valve seat 10, which is defined in the fluid channel 4. When the valve disc 9 is brought into engagement with the valve seat 10, the valve 1 is closed. When the valve disc 9 is moved away from the valve seat 10, the valve 1 is opened such that a fluid may flow from the inlet opening 5 via the valve seat 10 to the outlet opening 6, as indicated by a bold arrow in Fig. 1A. The valve 1 thus has at least two states: a closed state and an open state.

It should be understood that the description of the valve arrangement 100 in Fig. 1A is equally applicable to other types of valves, including butterfly valves. In a butterfly valve, the flow controlling element 7 also comprises a valve disc 9 that is moved within a fluid channel 4. In contrast to the seat valve 1 shown in Fig. 1A, which imparts a linear movement to the valve disc 9, the butterfly valve imparts a rotating movement to the valve disc 9. The discussion further below refers to valves of both seat-type (denoted TYPE1), and butterfly-type (denoted TYPE2).

The valve 1 further comprises an actuator 11, which is mechanically coupled to the flow controlling element 7 and is operable to move the flow controlling element 7 in relation to the valve seat 10. In the illustrated example, the actuator 11 is a fluid-operated actuator. Thus, the actuator 11 is selectively pressurized by a control fluid (pneumatic or hydraulic) which is conveyed to and from the actuator 11 through a control fluid line 12. The control fluid line 12 extends between the actuator 11 and a control fluid opening 13 which is adapted for connection to a source of control fluid (not shown).

The valve controller 2 is configured to control, based on external control signals, the operation of the valve 1 and contains all electronic components of the valve arrangement 100. As noted above, the illustrated valve controller 2 is a separate component which is attached to valve 1. Specifically, one and the same valve controller 2 may be attached to and operated to control different types of valves 1, which thus have a common mechanical interface for attachment of the valve controller 2. In the following discussion it is assumed that the valve controller 2 is configured for installation on valves of both seat-type (TYPE1) and butterfly-type (TYPE2).

The internal operation of the valve controller 2 is controlled by a data processor 20 in conjunction with an electronic memory 21. The data processor 20 may be implemented as a microprocessor, a CPU ("Central Processing Unit"), a DSP ("Digital Signal Processor"), an ASIC ("Application-Specific Integrated Circuit"), discrete analog and/or digital components, or some other programmable logical device, such as an FPGA ("Field Programmable Gate Array"). The electronic memory 21 may include one or more computer storage media in the form of volatile and/or non-volatile memory such as read only memory (ROM), random access memory (RAM) and flash memory. Special-purpose software comprising machine-readable instructions for execution by the data processor 20 may be stored in the system memory, or on another removable/non-removable volatile/non-volatile computer storage medium which is included in or accessible to the valve controller 2.

The valve controller 2 comprises an input/output (I/O) interface 22 for connection to an external control system or control network (not shown). The control network may be of any type, including but not limited to control networks based on commercially available standards such as Modbus, DeviceNet, Profibus, Fieldbus and Actuator-Sensor Interface (AS-interface). The data processor 20 is connected to the I/O interface 22 by a first transmission line 23 and a second transmission line 24.

The valve controller 2 further comprises a force generator 25 that operates to selectively energize and de-energize the actuator 11, causing the actuator 11 to move the flow controlling element 7 in the fluid channel 4. In the illustrated example with a fluid-controlled actuator 11, the force generator 25 may be implemented as an electromagnetic control valve which is installed in the control fluid line 12 to direct pneumatic or hydraulic pressure to the valve 1, so as to energize the actuator 11, and from the valve 1, so as to de-energize the actuator 11. The operation of the force generator 25 is controlled by the data processor 20. In an alternative implementation (not shown), the force generator 25 is instead installed as part of the valve 1. Furthermore, the force generator 25 may instead be configured to electrically or electromagnetically energize and de-energize the actuator 11, as in well-known in the art. Depending on configuration, the valve 1 may be either open or closed when the actuator 11 is energized. For the purpose of the following disclosure, it is assumed that the valve 1 is open when the actuator 11 is de-energized and closed when the actuator 11 is energized.

The valve controller 2 further comprises a position sensor 26 which is configured to generate a position signal that represents the current position of the flow controlling element 7 in a predefined coordinate system within a sensing range R. In the illustrated example, the position sensor 26 is a magneto-resistance sensor that senses the location of a magnet 27, which is attached on or integrated in a stem portion 8A that moves in unison with the flow controlling element 7, as indicated by the double-ended arrow in Fig. 1A. The stem portion 8A is thus directly or indirectly coupled to the flow controlling element 7, and its movement represents the movement of the flow controlling element 7 with respect to the valve seat 10. It should be understood that the position sensor 26 may be of any conventional type, including but not limited to an inductive sensor array, a laser based sensor, an ultrasound sensor, a mechanical switch array, etc. In the following discussion and as shown in Fig. 1A, it is assumed that the position sensor 26 measures a linear motion of the stem portion 8A and indicates a first position P1 when the valve 1 is open, and a second position P2 when the valve 1 is closed. It is also assumed that the same configuration of the position sensor 26 and the sensing range R is valid for all valves that are controlled by the valve controller 2, including both seat valves and butterfly valves. Thus, the butterfly valves also have the stem portion 8A with a magnet 27 that projects into the valve controller 2 and moves on a linear path to represent the movement of the flow controlling element 7. This means that the actuator 11 of the butterfly valve is configured to convert the rotational movement of the flow controlling element 7 into a linear movement of the stem portion 8A. In an alternative embodiment, not shown herein, the position sensor 26 may be located in the valve 1, e.g. to directly sense the motion of the flow controlling element 7. In such an embodiment, different valves may use different types of position sensors.

The valve controller 2 further comprises a status indicator 28, which may be one or more LEDs, a display, an audio signaling device (e.g. a speaker, buzzer, beeper), etc. The status indicator 28 is configured to indicate operational errors and other errors of the valve arrangement 100 to an external observer, and may also indicate that the valve arrangement 10 operates properly (absence of errors). The operation of the status indicator 28 is controlled by the data processor 20.

Fig. 1B illustrates data signals that are generated and received by the data processor 20 in the valve arrangement 100 of Fig. 1A. Only data signals relevant for the following discussion are shown. For the network control of the valve arrangement 100, the data processor 20 receives a valve control signal CTRL1 from the control network via the I/O interface 22 and the first transmission line 23, and provides a status signal S to the control network via the second transmission line 24 and the I/O interface 22. For the internal operation of the valve arrangement 100, the data processor 20 receives a position signal POS from the position sensor 26 and provides an actuator control signal CTRL2 to the force generator 25.

As indicated above, the valve arrangement 100 is configured to be installed in a control network, so as to communicate with a network controller, which may be implemented as a Programmable Logic Controller (PLC) or a Personal Computer (PC), or a gateway that connects the control network to a higher level-network. The network controller transmits the above-mentioned valve control signal CTRL1, which may cause the valve controller 2 to set the valve 1 in a particular state given by the signal CTRL1, e.g. an open state or a closed state. During operation, the valve controller 2 may perform a self-validation and generate the above-mentioned status signal S based on the outcome of the self-validation. For example, the status signal S may indicate that the valve arrangement 100 was unable to attain the particular state given by the signal CTRL1 and/or to confirm that the particular state was indeed attained. The provision of such a status signal S may be important to enable early detection of operational failures or inaccuracies among the valve arrangements installed in a control network.

During the self-validation, the valve controller 2 evaluates one or more validation criteria. One such validation criterion is to check that the current position of the flow controlling element 7, given by the position signal POS, lies within acceptable limits when the valve 1 is in the open state and in the closed state, respectively. The acceptable limits thus define a respective range of acceptable positions and these acceptable ranges are denoted "tolerance bands" in the following. If a state results in a current position that deviates from the associated tolerance band, a potential malfunction of the valve arrangement 100 may be deduced and the status signal S may be generated to alert the network controller that valve arrangement 100 is not operating properly. Alternatively or additionally, the valve controller 2 may give this alert via the status indicator 28. The malfunction may have many different origins, e.g. a mechanical component failure in the valve 1, an excessive pressure of the medium within the fluid channel 4, a presence in the fluid channel 4 of a foreign object that interferes with the movement of the flow controlling element 7, wear that makes the actuator 11 operate incorrectly, e.g. by a seal leaking control fluid. The valve controller 2 is typically unable to identify the cause of the malfunction.

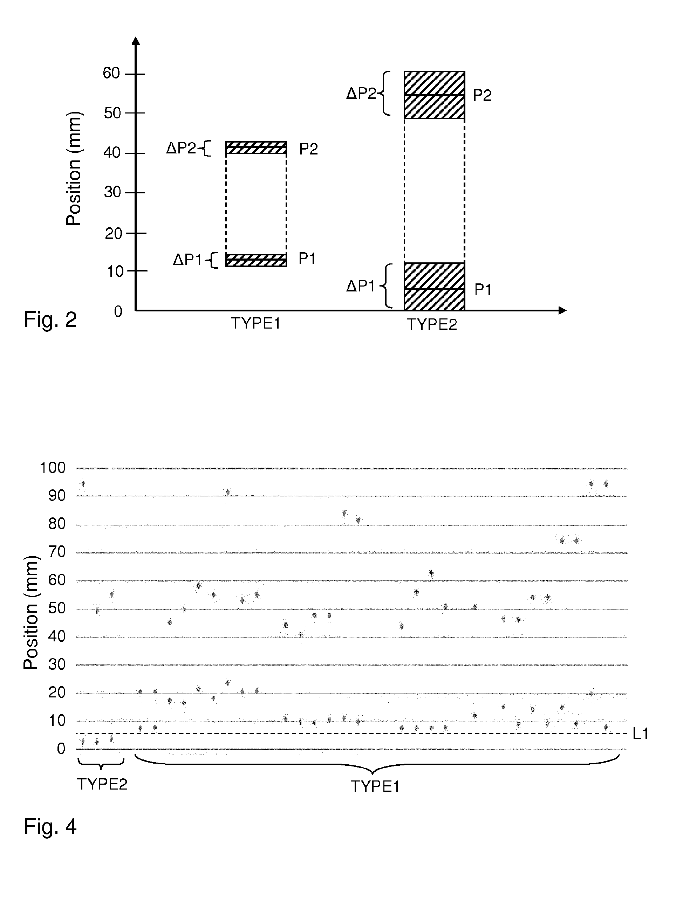

Fig. 2 illustrates typical position values and tolerance bands for a seat valve (left) and a butterfly valve (right). P1 and P2 indicate the first and second positions of the flow controlling element 7, given by the position signal POS, when the valve 1 is in the open state and the closed state, respectively. These first and second positions P1, P2 are measured during a configuration phase, which may be executed when the valve arrangement 100 is first installed in the control network, or after service or maintenance of the valve arrangement 100. As used herein, position values measured during the configuration phase are denoted "nominal positions" (but may also be denoted "reference positions"), in contrast to position values that are measured during regular operation of the valve arrangement, which are referred to as "current positions". From the foregoing, it is understood that the validation criterion is evaluated based on current positions. As seen in Fig. 2, each of the first and second nominal positions P1, P2 is associated with a respective tolerance band. The tolerance bands are indicated by hatched areas and are designated by ΔP1 for the first nominal position P1 and ΔP2 for the second nominal position P2. Generally, and as shown in Fig. 2, the widths of the tolerance bands ΔP1, ΔP2 differ between seat valves and butterfly valves. Typically, the tolerance bands are more narrow for a seat valve (TYPE1) compared to a butterfly valve (TYPE2), due to differences in the mechanical precision of seat valves compared to butterfly valves.

Since one and the same valve controller 2 may be installed on different types of valves 1, and in this example on both seat valves and butterfly valves, the valve type must be known to the valve controller 2 when setting the tolerance band. It is undesirable to require the operator to enter the valve type for each valve controller, since this is a time consuming operation which is prone to human error. A valve controller 2 installed on a butterfly valve but operating with tolerance bands of a seat valve, will be likely to generate false alarms. Conversely, a valve controller 2 installed on a seat valve but operating with tolerance bands of a butterfly valve, may fail to identify a malfunction.

It has surprisingly been found that it is possible to discriminate between the different types of valves based on the nominal positions of the valve. Based on this insight, the valve controller 2 is configured to perform a self-configuration during the configuration phase, in which the valve controller 2 automatically identifies the valve type based on the nominal positions that are measured during the configuration phase and sets the tolerance bands accordingly. The valve controller 2 may enter the configuration phase based on a command received from the control network, e.g. by the valve control signal CTRL1, or by an operator manually pressing one or more mechanical switches (not shown) on the valve controller 2.

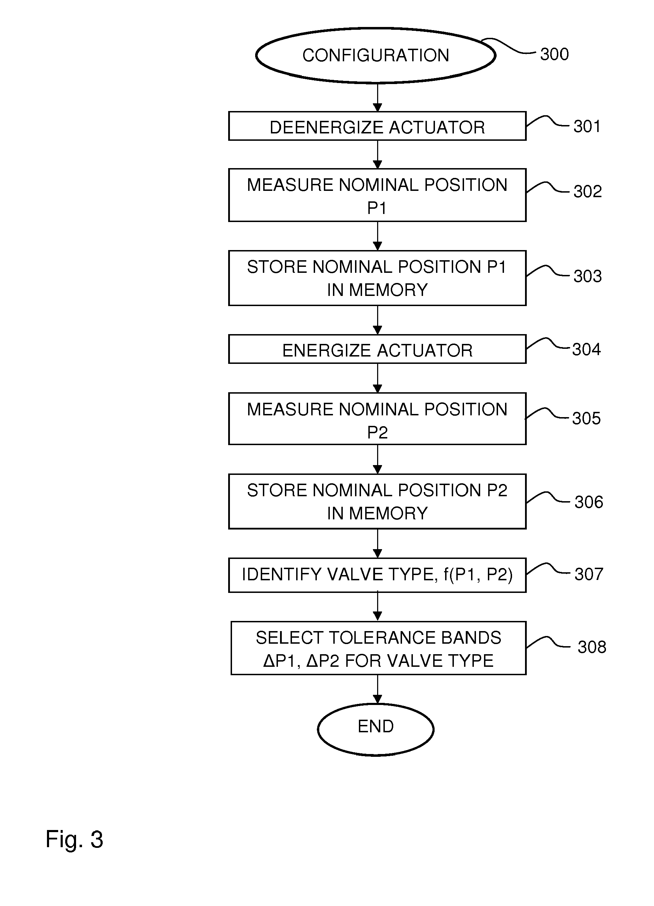

An example of such a configuration phase 300 is given in the flow chart of Fig. 3. The steps 301-308 in Fig. 3 are executed by the data processor 20 of the valve controller 2 in Fig. 1A. In step 301, the data processor 20 generates the actuator control signal CTRL2 to cause the force generator 26 to de-energize the actuator 11, which thereby moves the flow controlling element 7 to the open state. Following step 301, the data processor 20 may wait for a predetermined time period ("settling time") to allow the position of the flow controlling element 7 to stabilize. Then, in step 302, the data processor 20 measures the first nominal position P1, e.g. by retrieving a position value from the position signal POS. In step 303, the first nominal position P1 is stored in memory 21. In step 304, the data processor 20 generates the actuator control signal CTRL2 to cause the force generator 26 to energize the actuator 11, which thereby moves the flow controlling element 7 to the closed state. Again, the data processor 20 may wait for settling time before executing step 305, in which the second nominal position P2 is measured, e.g. by retrieving a position value from the position signal POS. In step 306, the second nominal position P2 is stored in memory 21. It should be understood that each of the first and second nominal positions P1, P2 may be obtained as a time-average of position values in the position signal POS. Alternatively, the data processor 20 may repeatedly execute steps 301, 302, 304 and 305, and compute the first and second nominal positions P1, P2 as an average of position values obtained in step 302 and step 305, respectively. When, the first and second positions P1, P2 have been measured, the data processor 20 identifies the valve type as a function of the first and second nominal positions P1, P2 (step 307). Step 307 will be further exemplified below with reference to Fig. 4. In step 308, the data processor 20 selects the proper tolerance bands ΔP1, ΔP2 for the valve type identified in step 307 and sets these tolerance bands ΔP1, ΔP2 to be used during regular operation of the valve arrangement 100. Step 308 may e.g. store the selected tolerance bands ΔP1, ΔP2 in memory 21. In a first implementation of step 308, the data processor 20 may use tolerance bands ΔP1, ΔP2 which have a predetermined and fixed width, but which are set in a predefined relation to the actual values of the nominal positions P1, P2. For example, the data processor 20 may center the tolerance bands ΔP1, ΔP2 around the respective nominal position P1, P2 (see steps 501-502 below). In a second implementation of step 308, which also involves a predefined relation, the tolerance bands ΔP1, ΔP2 may be given as a relative measure of the nominal positions, e.g. a percentage to be added and subtracted from the respective nominal position. In a third implementation of step 308, the data processor 20 may use tolerance bands ΔP1, ΔP2 which have both a predetermined and fixed width and a predetermined and fixed center position. Thus, while the tolerance bands ΔP1, ΔP2 are identified based on the nominal positions P1, P2, they are set irrespective of the actual values of the nominal positions P1, P2. This implementation is processing efficient and simple, since it only requires the data processor 20 to retrieve predefined tolerance bands from the memory 21. However, it does not take into account individual variations between valves of the same type.

It should be understood that the configuration phase 300 need not explicitly identify the valve type before selecting the tolerance band. In an alternative implementation, the data processor 20 may be configured to directly select the tolerance bands ΔP1, ΔP2 as a function of the first and second nominal positions P1, P2. However, even in such an implementation, step 307 is implicitly executed, since the selected tolerance bands ΔP1, ΔP2 will be defined for, and thereby implicitly associated with, a specific valve type.

Although not shown in Fig. 3, the configuration phase 300 may further comprise a step of generating the above-mentioned status signal S so as to identify the valve type, obtained in step 307, and a step of transmitting the status signal S to the network controller via the I/O interface 22. The data processor 20 may execute these steps automatically or following a request by the network controller. Thereby, the network controller is allowed a simple way to retrieve and maintain updated information about the types of valves installed within the topology of the control network.

To further exemplify the utility of the present invention, Fig. 4 illustrates pairs of nominal positions for different valves belonging to two different valve types, where the vertical axis (left) indicate positions along the sensing range R of the position sensor 26 (cf. Fig. 1A). Each column of dots in Fig. 4 represents a different product manufactured by the present applicant. As indicated at the bottom of Fig. 4, there are 3 different valve products of TYPE1, i.e. butterfly valves, and 28 different valve products of TYPE2, i.e. seat valves. The lower dot in each pair represents the first nominal position P1, and the upper dot in each pair represents the second nominal position P2. Each dot is obtained as an average for a plurality of items of the respective valve product. Fig. 4 also indicates a limit value L1 that may be used by step 307 to discriminate between valves of TYPE1 and TYPE2. Accordingly, step 307 may identify a valve as belonging to TYPE2 (butterfly valve) if a first condition C1 is fulfilled, where condition C1 stipulates that the first nominal position P1 is less than the first limit value L1. Otherwise, the valve is identified as belonging to TYPE1 (seat valve). In the specific example illustrated in Fig. 4, the first limit value L1 may be set to 7 mm.

To increase the robustness of the identification, step 307 may apply a second condition C2, which stipulates that the difference between the second and first nominal positions (i.e. the stroke length) is larger than a second limit value (not shown in Fig. 4). If both conditions C1, C2 are fulfilled, the valve is identified as belonging to TYPE2, otherwise as belonging to TYPE1. In the specific example illustrated in Fig. 4, the second limit value L2 may be set to 40 mm.

In Fig. 3, the first and second nominal positions P1, P2 were defined as being associated with a de-energized and an energized actuator 11, respectively. In Fig. 4, it is presumed that first nominal position P1 is the lower position within the sensing range R. However, there are actuators 11 that move the stem portion 8A to the lower position when energized instead of when de-energized. If such actuators 11 are known to be included among the valves 1 to be used with the valve controller 2, the first condition C1 may be modified to stipulate that either of the first and second nominal positions P1 should be less than the first limit value L1, for the valve to be identified as a butterfly valve.

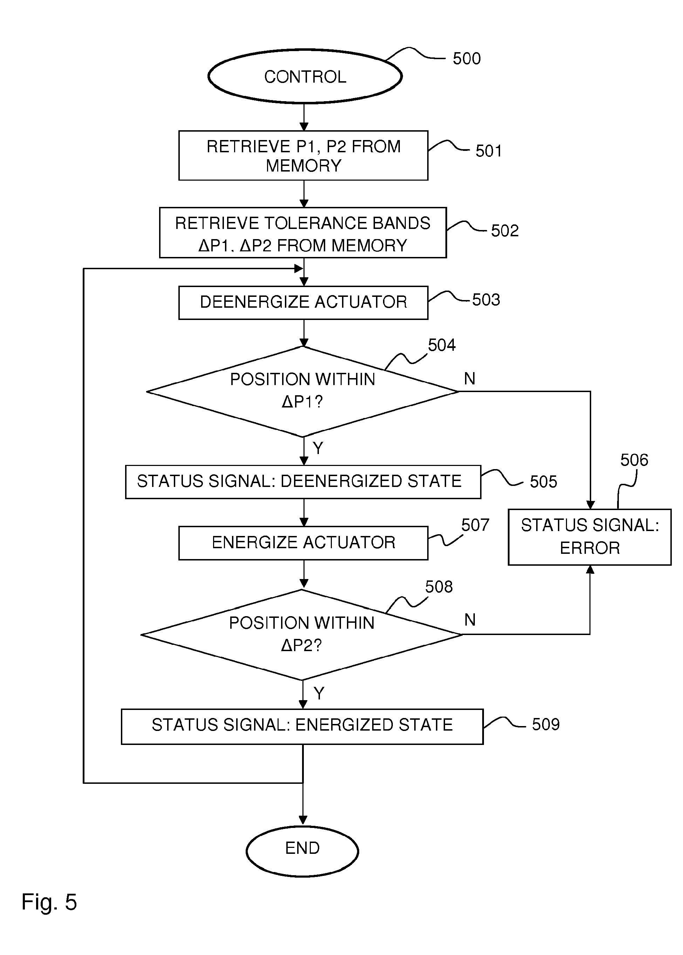

After completion of the configuration phase 300, the valve controller 2 is ready to enter a flow control phase in which it controls the valve 1 based on the valve control signal CTRL1 received from the control network via the I/O interface 22. An example of such a flow control phase 500 is given in the flow chart of Fig. 5. The steps 501-509 in Fig. 5 are executed by the data processor 20 of the valve controller 2 in Fig. 1A. In step 501, the first and second nominal positions P1, P2 are retrieved from memory 21. These positions were stored in memory 21 by steps 303, 306 during the configuration phase 300. In step 502, the tolerance bands ΔP1, ΔP2 for the valve 1 are retrieved from memory 21. The tolerance bands ΔP1, ΔP2 were stored in memory 21 by step 308 during the configuration phase 300. If the tolerance bands ΔP1, ΔP2 are given as predetermined ranges of fixed width (first implementation of step 308, above) or as a relative measure (second implementation of step 308, above), the tolerance bands ΔP1, ΔP2 are set in relation to the first and second nominal positions P1, P2 retrieved from memory in step 501. In an alternative, step 501 is omitted and replaced by steps of measuring the first and second nominal positions P1, P2, similarly to steps 302 and 305 in Fig. 3. In this alternative, steps 303 and 306 in Fig. 3 may be omitted. On the other hand, if the tolerance bands ΔP1, ΔP2 are given as a predetermined range of both fixed width and fixed center position (third implementation of step 308, above), the tolerance bands ΔP1, ΔP2 are set irrespective of the first and second nominal positions P1, P2, and step 501 may be omitted (as well as steps 303 and 306 in Fig. 3).

Following step 502, assuming that the valve control signal CTRL1 requests the valve 1 to be opened, the data processor 20 transmits an actuator control signal CTRL2 causing the actuator 11 to be de-energized (step 503). Following step 503, the data processor 20 may wait for a settling time to allow the position of the flow controlling element 7 to stabilize. Then, in step 504, the data processor 20 retrieves a current position value from the position signal POS and checks if the current position falls within the tolerance band ΔP1. If so, the data processor 20 generates and transmits the status signal S to verify the de-energized (open) state (step 505). If not, the data processor 20 generates and transmits the status signal S to indicate an error status of the valve 1 (step 506). Concurrently, the data processor 20 may operate the status indicator 28 to indicate the error status. Subsequent to step 505, assuming that the valve control signal CTRL1 requests the valve to be closed, the data processor 20 transmits an actuator control signal CTRL2 causing the actuator 11 to energized (step 507). Again, the data processor 20 may wait for settling time before executing step 508, in which the data processor 20 retrieves a current position value from the position signal POS and checks if the current position falls within the tolerance band ΔP2. If so, the data processor 20 generates and transmits the status signal S to verify the energized (closed) state (step 509). If not, the data processor proceeds to step 506, which generates and transmits the status signal S to indicate an error status of the valve 1 (step 506). Concurrently, the data processor 20 may operate the status indicator 28 to indicate the error status. Following step 509, the flow control phase 500 may proceed to step 503, if the valve control signal CTRL1 requests the valve 1 to be opened.

It is realized that the flow control phase 500 operates based on reference data determined during the configuration phase 300, specifically the first and second nominal positions P1, P2 and the tolerance bands ΔP1, ΔP2. Thus, the combination of the configuration phase 300 and the flow control phase 500 allows the valve controller 2 to operate autonomously, with minimum intervention of an operator.

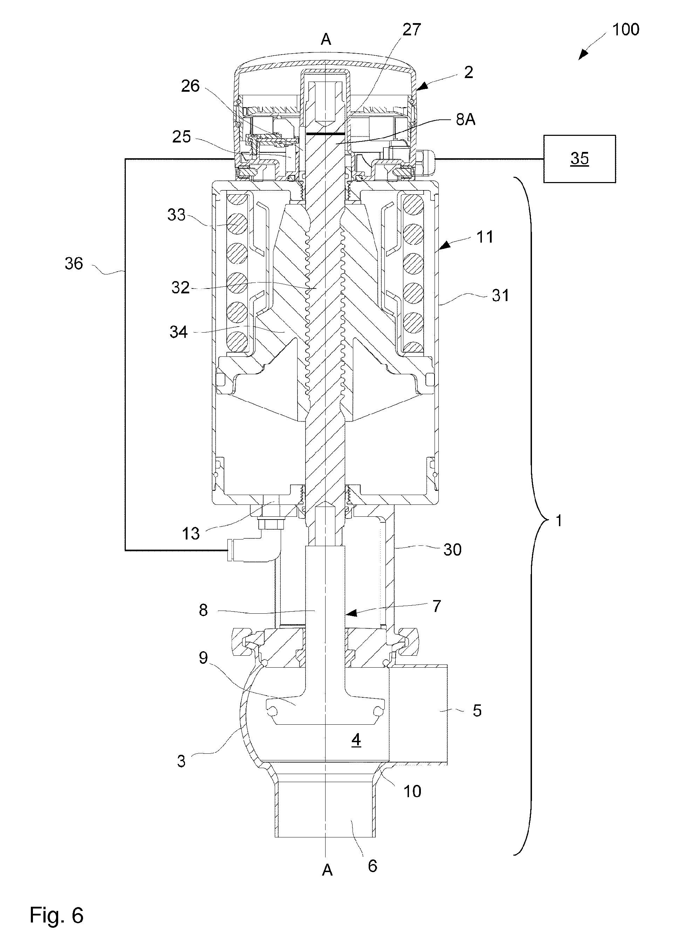

For the mere purpose of illustration, Figs 6-7 show more detailed examples of valve arrangements 1 involving a valve 1 of seat-type and butterfly-type, respectively. For brevity of presentation, all details of the valve arrangement 1 will not be described, but emphasis will be given to describing the overall structure and function of the valve 1 in the respective valve arrangement 1. Elements described in relation to Fig. 1A are given the same reference numerals. The operation and structure of the valve controller 2 have been described in the foregoing and will not be repeated.

In the example of Fig. 6, the seat valve 1 is formed as a combination of an actuator 11, a connection element 30 and a valve housing 3. The valve controller 2 is attached to the actuator 11 at the top of the seat valve 1. The valve housing 3 defines a fluid channel 4 that extends between inlet and outlet openings 5, 6. A valve stem 8 with a valve disc 9 is movable in a direction towards and from a valve seat 10 along a direction parallel to a geometrical center axis A of the valve stem 8. The actuator 3 comprises a cylindrical actuator housing 31. An actuator rod 32 extends through openings in the top and bottom portions of the actuator housing 31. The top portion of the actuator rod 32 forms the above-mentioned stem portion 8A which includes a magnet 27 that interacts with the position sensor 26 in the valve controller 2, and the lower portion of the actuator rod 32 is connected to the upper portion of the valve stem 8. The actuator rod 32 is movable back and forth in a direction parallel to the geometrical center axis A of the valve stem 8. The connection element 30 defines a cylindrical, hollow body that mechanically connects the valve housing 3 to the actuator housing 31. Inside the actuator housing 31, a pre-compressed spring 33 is arranged with one spring end acting on the actuator housing 31 and the opposite spring end acting on a cylinder (piston) 34 which is attached to the actuator rod 32. The force exerted by the spring 18 thereby acts to move the cylinder 34 to a lowermost position, in which the valve disc 9 abuts the valve seat 10 and thus the seat valve 1 is normally closed. A control fluid opening 13 is defined in the actuator housing 31. The control fluid (typically air) is supplied by a source 35 along a fluid path 36 that extends through the valve controller 2 to the control fluid opening 13. The valve controller 2 is operable to selectively open and close the fluid path 25 by a control valve 25. When the valve controller 2 opens the fluid path 36, the control fluid enters the actuator housing 31 and exerts a force on the cylinder 34 sufficient to overcome the force exerted by the spring 33, thereby opening the seat valve 1 by driving the cylinder 34, and hence also the valve disc 10, in an upward direction. When the valve controller 2 closes the fluid path 36, and concurrently expels control fluid from the actuator housing 31 through a vent opening (not shown) on the valve controller 2, the force exerted by the spring 33 eventually overcomes the force exerted by the control fluid on the cylinder 34, which closes the seat valve 1.

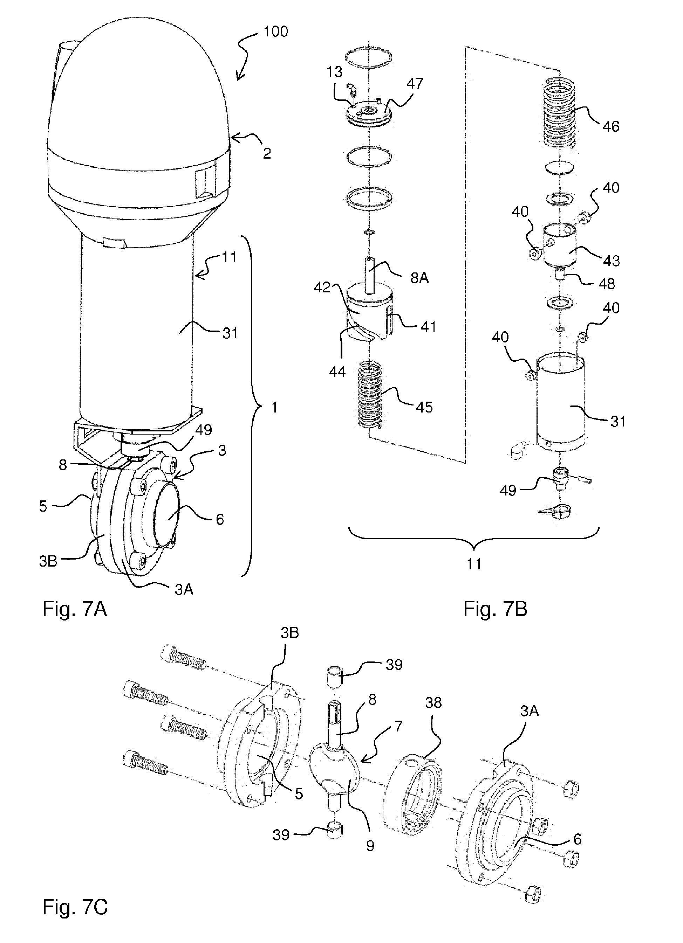

In the example of Figs 7A-7C, the butterfly valve 1 is formed as a combination of an actuator 11 and a valve housing 3. The valve controller 2 is attached to actuator 11 at the top of the butterfly valve 1. As seen in Fig. 7C, the valve housing 3 is formed by two valve body halves 3A, 3B which are combined by screws. The valve housing 3 defines a fluid channel that extends between an inlet opening 5 and an outlet opening 6. A seal ring 38 is fitted between the valve body halves 3A, 3B and receives a disc 9 of a flow controlling element 7 which is arranged for rotation by its valve stem 8 being located in bushings 38 attached to the valve housing 3. The flow controlling element 7 is rotatable between a closed position, in which the disc 9 is rotated with its normal direction parallel to the fluid channel, and an open position, in which the disc 9 is rotated with its normal direction perpendicular to the fluid channel. The structure of the actuator 11 is depicted in Fig 7B. The actuator 11 comprises an actuator housing 31, also denoted air cylinder. Needle bearings 40 are attached inside the actuator housing 31 to cooperate with an axial guiding groove 41 on a piston 42, which is arranged for axial movement inside the actuator housing 31. A rotating cylinder 43 is arranged within the piston 42 and has needle bearings 40 on its outside for cooperation with slanted guiding grooves 44 on the piston 42. An inner spring 45 and an outer spring 46 are encased between and within the piston 42 and the rotating cylinder 43. An end cap 47 is attached to the actuator housing 31 to close the actuator 11. A control fluid opening 13 is defined in the end cap 47 to admit a control fluid. The rotating cylinder 43 has an axial shaft 48, which projects through the bottom of the actuator housing 31. A coupling 49 is attached to the shaft 48 for connection to the upper portion of the valve stem 8. The piston 42 has an axial stem portion 8A, which projects through the end cap 47. Although not shown, a magnet is arranged on the stem portion 8A for interaction with the position sensor in the valve controller 2. As seen in Fig. 7B, the actuator 11 comprises a number of other components, such as o-rings, retaining rings, thrust bearings, a thrust plate etc, which are not described in further detail. Based on the foregoing, it is sufficient that the skilled person understands that the actuator 11 is designed so that an axial movement of the piston 42 is transformed into a 90° rotation of the shaft 48 and thus of the flow controlling element 7 within the valve housing 3. The axial movement is controlled by selectively controlling the flow of control fluid to and from the actuator housing 31 via the control fluid opening 13, in analogy with the control described in connection with Fig. 6.

While the invention has been described in connection with what is presently considered to be the most practical and preferred embodiments, it is to be understood that the invention is not to be limited to the disclosed embodiments, but on the contrary, is intended to cover various modifications and equivalent arrangements included within the spirit and the scope of the appended claims.

For example, the configuration phase 300 is not limited to selecting tolerance bands ΔP1, ΔP2. Generally, the configuration phase 300 may be seen to result in selection of at least one validation criterion for the valve 1, where the validation criterion is any criterion that may be evaluated during the flow control phase 500 to assess the status of the valve. In one alternative example, the validation criterion is given as a settling time for the valve 1, and the flow control phase 500 involves measuring the time required to switch the valve 1 from one state to another (e.g. from transmission of the actuator control signal CTRL2 to attainment of a stable current position as indicated by the position sensor 26) and evaluating if the measured time fulfils the validation criterion. In another alternative example, the validation criterion is given as a variability in current position, and the flow control phase 500 involves measuring and storing the current position for a given state of the valve 1 during a time period of switching the valve 1 to and from the given state and evaluating if the variability of the current position fulfils the validation criterion.

Furthermore, at least one of the nominal positions P1, P2 need not be associated with open and closed valve states, i.e. end positions of the flow controlling element 7, but could be associated with an intermediate position of the flow controlling element 7. Generally, the nominal position P1, P2 may correspond to any location along a movement trajectory for the flow controlling element 7 in the fluid channel 4 of the valve 1. From this follows that the nominal positions need not be attained when the actuator is de-energized and energized, but may be associated with different degrees of energization of the actuator. Still further, the configuration phase 300 may operate to determine more than two nominal positions for use when selecting of the validation criterion (step 308 in Fig. 3). In a further example, the nominal positions P1, P2 are associated with different flow paths through the valve 1, e.g. if the valve 1 is configured as a changeover valve.

It is to be understood that the valve arrangement 100 may include any type of valve 1, including on-off valves (normally closed or normally open, or double acting), changeover valves, mixing valves, pressure regulating valves, control valves, sampling valves, etc. The valve may have more one inlet opening and/or more than one outlet opening. The valve 1 may be of any design, including a single-seat valve, a double-seat valve, a butterfly valve, a membrane valve, a ball valve, a plug valve, a knife gate valve, etc.

From this follows that the configuration phase 300 may distinguish between any these different valve types to select a proper validation criterion for use during the flow control phase 500. Furthermore, the valves types need not be distinguished by the type of flow controlling element 7, but may be distinguished by other design features of the valve 1, such as the type of actuator 11 (e.g. electrically, hydraulically or pneumatically controlled).

The techniques described herein are not limited for use in self-contained valve controllers 2 that are supplied for mounting onto valves 1 of different types, but may also be used in valve controllers 2 that are integrated with a valve 1. In such an integrated valve arrangement 100, the valve controller 2 may execute the configuration phase at first use or after maintenance and repair.

In alternative embodiments, the valve type identified during the configuration phase 300 (in step 307 in Fig. 3) is used for other purposes than selecting a validation criterion, e.g. to select proper values of internal control parameters for use by the valve controller 2 when operating the valve 1 via the actuator 11 during the flow control phase 500. In yet another alternative, the configuration phase 300 merely identifies the valve type (in step 307 in Fig. 3) and communicates data about the valve type to the control network, e.g. by the status signal S transmitted via the I/O interface 22.

## Claims

1. A valve controller for a valve (1) that comprises an actuator (11) mechanically coupled to a flow controlling element (7), said valve controller being configured to receive a position signal (POS) indicative of a position of the flow controlling element (7), and to control the actuator (11) to position the flow controlling element (7), said valve controller being further configured to execute a configuration phase comprising:
controlling the actuator (11) to set the flow controlling element (7) in a predefined first state,
acquiring, from the position signal (POS), a first nominal position value (P1) for the predefined first state while the flow controlling element (7) is in the predefined first state,
controlling the actuator (11) to set the flow controlling element (7) in a predefined second state,
acquiring, from the position signal (POS), a second nominal position value (P2) for the predefined second state while the flow controlling element (7) is in the predefined second state, and
assigning, based on the first nominal position value (P1) and the second nominal position value (P2), the valve (1) to a valve type (TYPE1, TYPE2) among a group of valve types and selecting a validation criterion (ΔP1, ΔP2) for the valve (1) based on said valve type (TYPE1, TYPE2).

2. The valve controller of claim 1, which is configured to receive a valve control signal (CTRL1) for controlling a fluid flow through the valve (1) and to generate a status signal (S), and wherein the valve controller is further configured to, subsequent to the configuration phase, perform a flow control phase comprising:
controlling the actuator (11) based on the valve control signal (CTRL1),
evaluating the validation criterion (ΔP1, ΔP2), and
generating the status signal (S) to indicate an error status if the validation criterion (ΔP1, ΔP2) is violated.

3. The valve controller of claim 1 or 2, wherein the validation criterion (ΔP1, ΔP2) defines an acceptable range of position values for the flow controlling element (7), as given by the position signal (POS), while the flow controlling element (7) is in one of the predefined first and second states.

4. The valve controller of claims 2 and 3, which is configured to, when evaluating the validation criterion (ΔP1, ΔP2) and while the flow controlling element (7) is set in said one of the predefined first and second states, compare a current position value acquired from the position signal (POS) with the acceptable range (ΔP1, ΔP2) of position values, and generate the status signal (S) to indicate the error status when the current position value is outside the acceptable range (ΔP1, ΔP2) of position values.

5. The valve controller of claim 4, which is configured to generate the status signal (S) to confirm said one of the predefined first and second states when the current position value lies within the acceptable range (ΔP1, ΔP2) of position values.

6. The valve controller of any one of claims 3-5, wherein the acceptable range (ΔP1, ΔP2) of position values is predefined for each valve type (TYPE1, TYPE 2) and has a predefined relation to one of the first and second nominal position values (P1, P2), and wherein the valve controller is configured to set the acceptable range (ΔP1, ΔP2) of position values based on the valve type (TYPE1, TYPE2) and in the predefined relation to said one of the first and second nominal position values (P1, P2).

7. The valve controller of any one of claims 3-5, wherein the acceptable range (ΔP1, ΔP2) of position values is predefined for each valve type (TYPE1, TYPE 2), and wherein the valve controller is configured to set the acceptable range (ΔP1, ΔP2) of position values based on the valve type (TYPE1, TYPE 2) and independent of the first and second nominal position values (P1, P2).

8. The valve controller of any preceding claim, wherein at least two of the valve types (TYPE1, TYPE 2) in the group of valve types have different types of flow controlling elements (7).

9. The valve controller of any preceding claim, wherein the group of valve types includes a butterfly-type valve and a seat-type valve.

10. The valve controller of any preceding claim, which is configured to assign the valve (1) as a butterfly-type valve if the first or second nominal position value (P1, P2) is less than a first limit value (L1), and a difference between the first nominal position value (P1) and the second nominal position value (P2) exceeds a second limit value (L2).

11. The valve controller of any preceding claim, wherein the predefined first and second states correspond to a respective end position along a movement trajectory for the flow controlling element (7).

12. The valve controller of any preceding claim, wherein the valve (1) is one of an on-off valve and a changeover valve.

13. The valve controller of any preceding claim, which further comprises a data processor (20) configured to implement at least the configuration phase, and an electronic memory (21), said data processor (20) being configured to, during the configuration phase, store the first nominal position value (P1) and the second nominal position value (P2) in the electronic memory (21) for subsequent retrieval.

14. A method of controlling a valve (1), said method being performed by a data processor (20) and comprising a sequence of configuration steps comprising:
generating an actuator control signal (CTRL2) for controlling an actuator (11) to set a flow controlling element (7) of the valve (1) in a predefined first state,
acquiring, while the flow controlling element (7) is in the predefined first state, a first nominal position value (P1) for the predefined first state from a position sensor (26) associated with the valve (1),
generating the actuator control signal (CTRL2) for controlling the actuator (11) to set the flow controlling element (7) in a predefined second state,
acquiring, while the flow controlling element (7) is in the predefined second state, a second nominal position value (P2) for the predefined second state from the position sensor (26); and
assigning, based on the first nominal position value (P1) and the second nominal position value (P2), the valve to a valve type (TYPE1, TYPE2) among a group of valve types and selecting a validation criterion (ΔP1, ΔP2) for the valve (1) based on said valve type (TYPE1, TYPE2).

15. A valve arrangement comprising the valve controller (2) of any one of claims 1-13, the valve arrangement further comprising a valve (1), the valve (1) comprising:
a valve housing (3),
at least one inlet opening (5) on the valve housing (3),
at least one outlet opening (6) on the valve housing (3),
a fluid channel (4) defined in the valve housing (3) to extend between the at least one inlet opening (5) and the at least one outlet opening (6),
a flow controlling element (7) arranged for movement in the fluid channel (4), and
an actuator (11) mechanically coupled to the flow controlling element (7) and being directly or indirectly controlled by the valve controller (2) to move the flow controlling element (7) in the fluid channel (4) so as to control a fluid flow through the valve housing (3) between the at least one inlet opening (5) and the at least one outlet opening (6).
